# EUROPEAN PATENT APPLICATION

(11) **EP 4 841 319 A1**
(43) Date of publication of application: **18.11.2026**
(21) Application number: 24948080.7
(22) Date of filing: 15.11.2024
(51) Int. Cl.: G02B 6/38

(54) **OPTICAL FIBER CONNECTOR, OPTICAL FIBER CABLE ASSEMBLY, AND OPTICAL FIBER CONNECTION SYSTEM**

(30) Priority: 16.10.2024 CN 202422509326 U
(71) Applicant: Zhejiang Chaoqian Telecommunication Technologies Co., Ltd, Taizhou, Zhejiang 317200 (CN)
(72) Inventor: DONG, Min, Taizhou, Zhejiang 317200 (CN)
(74) Representative: Botti & Ferrari S.p.A.
(86) International application number: PCT/CN2024/132161
(87) International publication number: WO 2026/081278

(57) **Abstract**

The present application relates to an optical fiber connector, wherein the optical fiber connector comprises a ferrule assembly and a connector housing, the ferrule assembly being arranged in a head area of the connector housing, wherein the optical fiber connector comprises an axially penetrating internal passage being constructed for allowing an optical fiber to extend through the optical fiber connector, wherein the connector housing comprises an elastic snap-fit structure movable from an initial state to a deformed state which is biased inward with respect to the initial state, and movable from the deformed state to the initial state under the action of the restoring elastic force, wherein the snap-fit structure comprises an latching protrusion projecting outward. The present application also relates to an optical fiber cable assembly and an optical fiber connection system.

## Description

### CROSS-REFERENCE TO RELATED APPLICATIONS

The present application is based on and claims priority to CN Patent Application No. 202422509326.9 filed on October 16, 2024, the disclosure of which is incorporated by reference herein in its entirety.

### TECHNICAL FIELD

The present application relates to an optical fiber connector, an optical fiber cable assembly and an optical fiber connection system.

### BACKGROUND ART

The popularity of optical fiber communication systems is increasing day by day, and optical fiber communication systems can efficiently transmit large amounts of data over long distances by using optical fiber cable networks. Optical fiber connectors play an important role in most optical fiber communication systems, through optical fiber connectors, rapid optical connections between two optical fibers can be realized without splicing. By aligning, for example, two optical fiber connectors end-to-end, two optical fiber sections can be optically interconnected. In addition, optical fiber connectors can also be used for interconnecting optical fiber cables with other devices (such as lasers, receivers or optical splitters). Common types of optical fiber connectors include SC, LC, ST, MTP/MPO, etc.

Nowadays, there exist various types of optical fiber connectors, and there may arise in practice a need to interconnect an optical fiber cable equipped with one type of optical fiber connector with an incompatible optical connection device. For this purpose, corresponding converting devices, such as optical fiber converters or optical fiber adaptors, are required, wherein optical fiber converter can convert an optical fiber connector into another type of optical fiber connector, while optical fiber adaptor can be used to interconnect optical fiber connectors of a same type or of different types with each other.

Due to the diverse application scenarios of optical fiber cables, it is important to realize flexible interconnection of an optical fiber cable with a mating component, such as a connection port of a device, an optical fiber converter or an optical fiber adaptor, etc.

### SUMMARY OF THE INVENTION

An object of the present application is to provide an optical fiber connector, an optical fiber cable assembly and an optical fiber connection system, by way of which it is possible to overcome at least part of the deficiencies in the prior arts. In particular, by means of the optical fiber connector, the optical fiber cable assembly and the optical fiber connection system, flexible interconnection of optical fiber cables can be realized.

A first aspect of the present application relates to an optical fiber connector, wherein the optical fiber connector comprises a ferrule assembly and a connector housing, the ferrule assembly being arranged in a head area of the connector housing, wherein the optical fiber connector comprises an axially penetrating internal passage being constructed for allowing an optical fiber to extend through the optical fiber connector, wherein the connector housing comprises an elastic snap-fit structure movable from an initial state to a deformed state which is biased inward with respect to the initial state, and movable from the deformed state to the initial state under the action of the restoring elastic force, wherein the snap-fit structure comprises an latching protrusion projecting outward.

The optical fiber connector according to the present application can be conveniently interconnected with counterpart, such as optical fiber connection port, optical fiber converter, dust cover, optical fiber adaptor, etc., by means of the elastic snap-fit structure, thereby realizing flexible interconnection of the optical fiber cable, this facilitates the use of optical fiber cable in diversified application scenarios.

According to one embodiment of the present application,the snap-fit structure includes a first section extending along an axial direction and a second section extending from the first section along a circumferential direction, wherein the latching protrusion is formed in an area of the second section remote from the first section.

According to one embodiment of the present application, the first section and the second section are configured to be plate-shaped.

According to one embodiment of the present application,the latching protrusion includes a first guide slope raised in a first direction, wherein the first direction is directed from the head of the optical fiber connector to the tail of the optical fiber connector.

According to one embodiment of the present application, viewed along the first direction, the latching protrusion sequentially includes a top connecting to the first guide slope and a step portion forming a latching action surface.

According to one embodiment of the present application,the latching protrusion includes an unlocking slope descending along a circumferential direction.

According to one embodiment of the present application,the connector housing comprises two snap-fit structures, the two snap-fit structures being rotationally symmetrical about a central axis of the optical fiber connector.

According to one embodiment of the present application,the connector housing includes a connector body with the internal passage and a retainer ring with the snap-fit structure, wherein the retainer ring is sleeved on the connector body.

According to one embodiment of the present application,the retainer ring includes an annular base, wherein the snap-fit structure connects to the base.

According to one embodiment of the present application,the connector body includes a positioning rib extending along the axial direction on the outer wall, and the retainer ring includes a positioning groove corresponding to the positioning rib on the inner wall, wherein the positioning rib and the positioning groove cooperate to define the relative position of the retainer ring with respect to the connector body along the circumferential direction.

According to one embodiment of the present application,the connector body includes a recess extending along the circumferential direction on the outer wall, wherein in the case where the retainer ring is sleeved on the connector body, the second section of the snap-fit structure is located in the area of the recess, wherein the recess forms a free space for the second section of the snap-fit structure.

According to one embodiment of the present application,the snap-fit structure includes a retaining protrusion located on the inner wall of the second section, wherein in the case where the retainer ring is sleeved on the connector body, the retaining protrusion and the recess cooperate to define the relative position of the retainer ring with respect to the connector body along the axial direction.

According to one embodiment of the present application,the retaining protrusion transitions, along a second direction, to the inner wall of the second section by way of a second guide slope, wherein the second direction is directed from the tail of the optical fiber connector to the head of the optical fiber connector.

According to one embodiment of the present application, retaining protrusion is located at a position corresponding to the latching protrusion.

According to one embodiment of the present application,the optical fiber connector includes at least one annular groove located between the snap-fit structure and the head of the optical fiber connector, wherein sealing ring is provided in the annular groove.

According to one embodiment of the present application,the ferrule assembly comprises ferrule, spring and ferrule housing, wherein the ferrule abuts against the ferrule housing via the spring and protrudes from the front end of the ferrule housing.

According to one embodiment of the present application,the ferrule housing includes connection slot formed in the tail area thereof, and wherein the connector housing includes connection key formed in the head area thereof, wherein the ferrule housing is mounted on the connector housing in such a manner that the connection key is engaged in the connection slot.

According to one embodiment of the present application,the connection key and the connection slot extend along the axial direction.

According to one embodiment of the present application,the ferrule housing comprises chamfer extending from its front end to back end.

According to one embodiment of the present application,the ferrule housing, at least in the front area thereof, comprises a rectangular outer cross section, wherein the chamfer is formed on at least one edge of the ferrule housing.

According to one embodiment of the present application,the chamfer extends over a portion of the length of the ferrule housing.

According to one embodiment of the present application, in the case where the ferrule housing is mounted on the connector housing, the outer surface of the ferrule housing and the outer surface of the connector housing smoothly align with each other at least in some areas.

According to one embodiment of the present application, in the case where the ferrule housing is mounted on the connector housing, the outer surface of the ferrule housing and the outer surface of the connector housing smoothly align with each other, except for the area of the connection key and the connection slot.

According to one embodiment of the present application,the optical fiber connector includes an optical cable fastener.

A second aspect of the present application relates to an optical fiber cable assembly, wherein the optical fiber cable assembly includes an optical fiber cable and the optical fiber connector according to the first aspect of the present application.

According to one embodiment of the present application,the optical fiber cable assembly includes a tail sleeve. The tail sleeve can be sleeved onto the optical fiber cable and the optical fiber connector in the area where the optical fiber cable extends out from the tail end of the optical fiber connector.

A third aspect of the present application relates to an optical fiber connection system, wherein the optical fiber connection system includes the optical fiber connector according to the first aspect of the present application or the optical fiber cable assembly according to the second aspect of the present application and includes a counterpart comprising an receiving portion configured to releasably receive the optical fiber connector, wherein the counterpart comprises at least one of an optical fiber converter, a dust cover, and an optical fiber adapter.

According to one embodiment of the present application,the optical fiber converter is an optical fiber converter for SC connector, Huawei connector, OptiTAP connector, or DLX connector.

According to one embodiment of the present application,the counterpart includes a cutout communicating with the receiving portion, wherein the latching protrusion of the optical fiber connector can be engaged into the cutout, thereby locking the counterpart and the optical fiber connector with each other.

According to one embodiment of the present application,the cutout is a blind hole constructed on the counterpart.

According to one embodiment of the present application,the cutout is a through hole constructed on the counterpart, an action can be exerted on the latching protrusion engaged in the cutout from the outside of counterpart via the through hole.

According to one embodiment of the present application,the receiving portion includes a section for defining the circumferential relative orientation of the optical fiber connector with respect to the counterpart, wherein the shape of the section is matched with the shape of a corresponding section of the optical fiber connector.

Other features and advantages of the subject art of the present application will be described in the following descriptions, and will be partially obvious from said descriptions, or may be learned by practicing the subject art of the present application. Advantages of the subject art of the present application will be realized and attained by the structure particularly set forth in the specification and the accompanying drawings.

It should be understood that, the aforementioned general descriptions and the following detailed descriptions are all exemplary and illustrative, and are intended to provide a further explanation of the subject art of the present application for which protection is sought.

### BRIEF DESCRIPTION OF THE DRAWINGS

A plurality of aspects of the present application will be better understood after reading the following embodiments in combination with the accompanying drawings, wherein:
Fig. 1 schematically shows a perspective view of an optical fiber cable assembly according to one embodiment of the present application;
Fig. 2 schematically shows an exploded view of the optical fiber cable assembly of Fig. 1;
Fig. 3 schematically shows a perspective view of the optical fiber cable assembly of Fig. 1;
Fig. 4 schematically shows different optical cable fasteners for the optical fiber cable assembly of Fig. 1;
Fig. 5 schematically shows an exploded view of a connector housing of an optical fiber connector according to one embodiment of the present application;
Fig. 6 schematically shows a sectional view of the connector housing of Fig. 5;
Fig. 7 schematically shows a perspective view of the connector housing of Fig. 5;
Figs. 8-10 schematically show a retainer ring of the connector housing of Fig. 5 from different perspectives;
Fig. 11 schematically shows an optical fiber connection system according to one embodiment of the present application;
Fig. 12 schematically shows a partial sectional view of an optical fiber connection system according to one embodiment of the present application;
Fig. 13 schematically shows a ferrule housing of the optical fiber cable assembly of Fig. 1; and
Fig. 14 schematically shows components of a counterpart of an optical fiber connection system according to one embodiment of the present application.

### DETAILED DESCRIPTION OF PREFERRED EMBODIMENTS

The present application will be described as follows with reference to the accompanying drawings, in which certain embodiments of the present application are shown. However, it is to be understood that the present application may be embodied in many different forms and should not be construed as limited to the embodiments that are pictured and described herein. Rather, these embodiments are provided so that this disclosure will be thorough and complete, and will fully convey the scope of the application to those skilled in the art. It will also be appreciated that the embodiments disclosed herein can be combined in any way to provide many additional embodiments.

Like numbers refer to like elements throughout. In the figures, the dimensions of certain features may be alternated for clarity.

It should be understood that the words in the Specification are only used to describe specific embodiments and are not intended to limit the present application. Unless otherwise defined, all terms (including technical terms and scientific terms) used in the Specification have the meanings commonly understood by those of ordinary skill in the art. For brevity and/or clarity, well-known functions or structures may not be further described in detail.

The singular forms "a", "an", "the" and "this" used in the Specification all include plural forms unless clearly indicated. The words "comprise", "contain" and "have" used in the Specification indicate the presence of the claimed features, but do not exclude the presence of one or more other features. The word "and/or" used in the Specification includes any or all combinations of one or a plurality of the related listed items. The words "between X and Y" and "between approximate X and Y" used in the Specification shall be interpreted as including X and Y. As used herein, the wording "between approximate X and Y" means "between approximate X and approximate Y", and as used herein, the wording "from approximate X to Y" means "from approximate X to approximate Y".

In the Specification, when it is described that an element is "on" another element, "attached" to another element, "connected" to another element, "coupled" to another element, or "in contact with" another element, etc., the element may be directly on another element, attached to another element, connected to another element, coupled to another element, or in contact with another element, or an intermediate element may be present. In contrast, if an element is described "directly" "on" another element, "directly attached" to another element, "directly connected" to another element, "directly coupled" to another element or "directly in contact with" another element, there will be no intermediate elements. In the Specification, a feature that is arranged "adjacent" to another feature, may denote that a feature has a part that overlaps an adjacent feature or a part located above or below the adjacent feature.

In the Specification, words expressing spatial relations such as "upper", "lower", "left", "right", "front", "rear", "top", and "bottom" may describe the relation between one feature and another feature in the attached drawings. It should be understood that, in addition to the locations shown in the attached drawings, the words expressing spatial relations further include different locations of a device in use or operation. For example, when a device in the attached drawings rotates reversely, the features originally described as being "below" other features now can be described as being "above" the other features. The device may also be oriented by other means (rotated by 90 degrees or at other locations), and at this time, a relative spatial relation will be explained accordingly.

Next, exemplary embodiments of the present application will be described in detail in conjunction with the accompanying drawings.

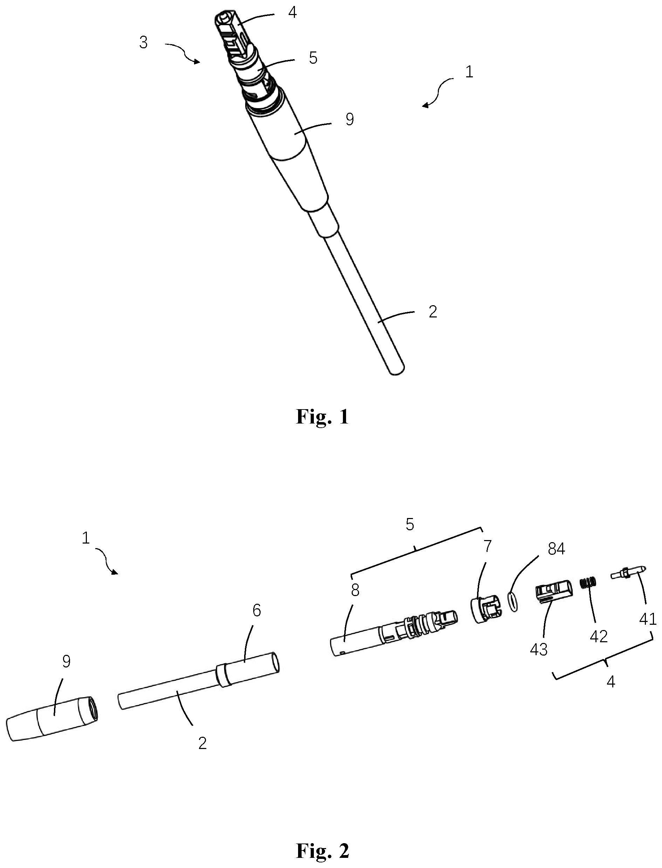

Fig. 1 schematically shows a perspective view of an optical fiber cable assembly 1 according to one embodiment of the present application. As shown in Figs. 1 to 3, the optical fiber cable assembly 1 may include an optical fiber cable 2 and an optical fiber connector 3 mounted on the optical fiber cable 2. The optical fiber connector 3 may also be used to couple the optical fiber cable 2 with another optical fiber cable or optical fiber segment, so as to establish optical connection between the optical fiber cable 2 and the other optical fiber cable or optical fiber segment. The optical fiber connector 3 may also be used to connect the optical fiber cable 2 to other devices, such as lasers, receivers or optical splitters, etc.

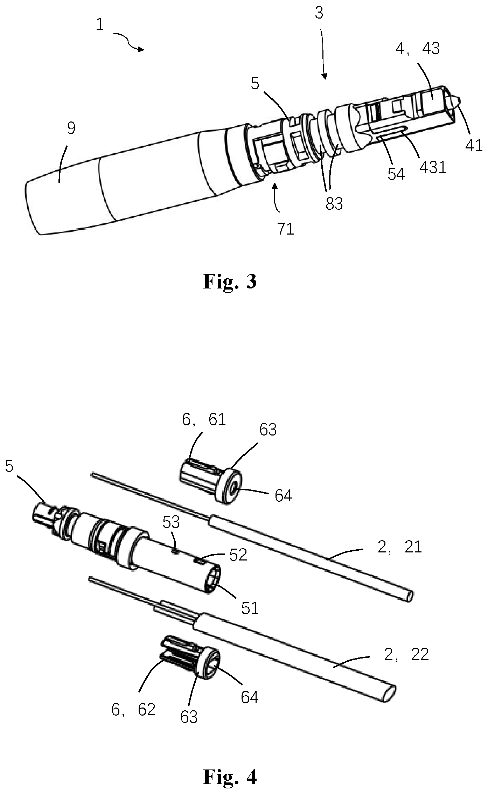

The optical fiber connector 3 may include a ferrule assembly 4 and a connector housing 5, the ferrule assembly 4 is disposed in a head area of the connector housing 5. The optical fiber connector 3 may include an axially penetrating internal passage configured such that the optical fiber (of the optical fiber cable 2) extends through the optical fiber connector 3. Further, the optical fiber connector 3 may include an optical cable fastener 6 when necessary (see Figs. 2 and 4). When mounting the optical fiber connector 3 onto the optical fiber cable 2, for example, the optical fiber cable 2 may be sequentially passed through a tail sleeve 9, the optical cable fastener 6, the connector housing 5 and the ferrule assembly 4. After the optical fiber of the optical fiber cable 2 is inserted and fixed to the ferrule assembly 4, the ferrule assembly 4, the connector housing 5, and the optical cable fastener 6 may be connected and assembled with each other, which will be introduced in detail below in combination with the specific structures of each component of the optical fiber connector 3. Finally, the optical fiber cable assembly 1 shown in Fig. 1 may be obtained by, for example, pushing the tail sleeve 9 onto the optical fiber connector 3 after sealing the optical fiber cable 2 and the optical fiber connector 3 in the tail area of the optical fiber connector 3 by using a heat shrink tube when necessary.

As shown in Fig. 4, in order to adapt to different optical fiber cables 2, the optical fiber connector 3 may have an optical cable fastener 6 matched with the optical fiber cable 2 to be used. The optical fiber cable 2 to be used may be, for example, 5mm round cable, 3mm round cable, 2mm×3mm/2mm×5mm butterfly cable (for example, butterfly cable with metal reinforcement), 4mm×7mm flat cable, 4mm×8mm flat cable, 6mm armored round cable, etc. In Fig. 4, a first optical fiber cable 21 in the form of a 3mm round cable and a second optical fiber cable 22 in the form of a 4×7mm flat cable, as well as a first optical fiber cable fastener 61 and a second optical fiber cable fastener 62 respectively matched therewith are exemplarily shown.

The first optical cable fastener 61 and the second optical cable fastener 62 may respectively have a base 63 and an extension portion 64 extending forward from the base 63 and having a reduced radial dimension with respect to the base 63. Here, the base 63 of the first optical cable fastener 61 and the second optical cable fastener 62 may have the same outer peripheral dimension, and the outer peripheral dimension of the base 63 may be configured such that the base 63 may abut against the tail end 51 of the connector housing 5 in the case where the extension portion 64 is pushed into the tail portion of the connector housing 5. For this purpose, the base 63 may have an outer diameter at least equal to, preferably slightly greater than that of the tail end 51 of the connector housing 5. It is also conceivable that the connector housing 5 has a necked portion in the tail area, and the base 63 may be pushed into the connector housing 5 and abut against the necked portion.

As can be seen from Fig. 4, the first optical cable fastener 61 has a through hole 64 matched with the cross section of the first optical cable 21, while the second optical cable fastener 62 has a through hole 64 matched with the cross section of the second optical cable 22, so that the first optical cable 21 may pass through the first optical cable fastener 61 without any problem, and the second optical cable 22 may pass through the second optical cable fastener 62 without any problem.

In order to retain the optical cable fastener 6 on the connector housing 5, the optical cable fastener 6 may include a latching hook 65, here two radially opposed latching hooks 65. The connector housing 5 may have a mating hole 52 corresponding to the latching hook 65 on the side wall of the tail area. When the extension portion 64 is pushed into the tail portion of the connector housing 5, the latching hook 65 may be clamped into the respective mating hole 52, thereby positioning and retaining the optical cable fastener 6 (and thus the optical fiber cable 2) on the connector housing 5.

In addition, the connector housing 5 may include a glue injection hole 53. Glue liquid may be injected into the connector housing 5 through the glue injection hole 53.

As can be most clearly seen from Fig. 2, in the shown embodiments, the ferrule assembly 4 may include a ferrule 41, a spring 42 and a ferrule housing 43. The ferrule 41 is particularly a ceramic ferrule and may have an appropriate ferrule end face geometry, for example, an end face geometry of PC, APC, UPC, etc. The ferrule 41 may have an optical fiber hole configured to allow the optical fiber of the optical fiber cable 2 to pass therethrough. The ferrule 41 may be predominantly housed within the ferrule housing 43, and the front end portion of the ferrule 41 may protrude beyond the front end of the ferrule housing 43 (see Fig. 3). One end of the spring 42 may be supported on the connector housing 5, and the other end of the spring 42 may be supported on the ferrule 41, so that the ferrule 41 may abut against the ferrule housing 43 by way of the spring 42.

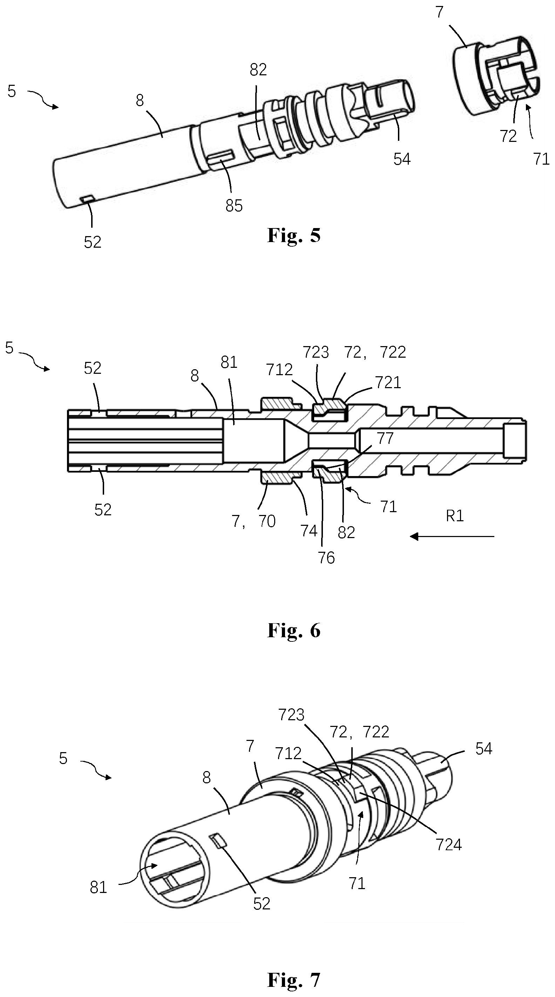

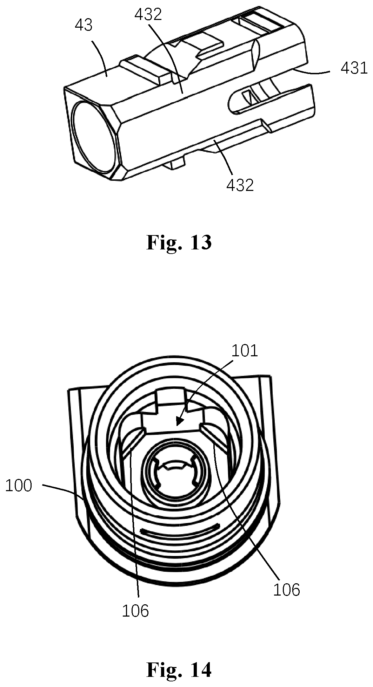

In order to retain the ferrule assembly 4 on the connector housing 5, the ferrule housing 43 may include a connection slot 431 (see Fig. 13) formed in its tail area, and the connector housing 5 may include a connection key 54 (see Figs. 5 and 7) formed in its head area. The connection key 54 and the connection slot 431 may both extend along the axial direction. As shown in Fig. 3, the ferrule housing 43 may be mounted on the connector housing 5 in such a way that the connection key 54 is engaged into the connection slot 431. Only one key-slot pair consisting of one connection slot 431 and one connection key 54 may be provided, or a plurality of key-slot pairs each consisting of one respective connection slot 431 and one respective connection key 54 may be provided. Advantageously, a key-slot pair may be provided on each of the opposed sides.

As can be most clearly seen from Fig. 3, in the case where the ferrule housing 43 is mounted on the connector housing 5, the outer surface of the ferrule housing 43 and the outer surface of the connector housing 5 may smoothly align and transition with each other at least in some areas, preferably over the entire outer periphery. In other embodiments, in the case where the ferrule housing 43 is mounted on the connector housing 5, the connection key 54 may project from the ferrule housing 43. Here, the outer surface of the ferrule housing 43 and the outer surface of the connector housing 5 may smoothly align and transition with each other except for the area where the connection key 54 and the connection slot 431 are engaged with each other.

In the embodiment shown in Figs. 5 to 7, the connector housing 5 may include a connector body 8 having an internal passage 81 (see Figs. 6 and 7) configured to allow the optical fiber to extend therethrough, and a retainer ring 7. The retainer ring 7 may be sleeved on the connector body 8. Here, the entire axial length of the connector housing 5 may be defined by the connector body 8. Therefore, the optical cable fastener 6 previously described may be held in the connector body 8 in the tail area of the connector body 8, while the ferrule assembly 4 previously described may be held in the connector body 8 in the head area of the connector body 8. The retainer ring 7 may be sleeved on the connector body 8 in the middle area of the connector body 8 (i.e., the area between the head area and the tail area of the connector body 8) and thus located between the ferrule assembly 4 and the optical cable fastener 6 in the assembled state of the optical fiber connector 3.

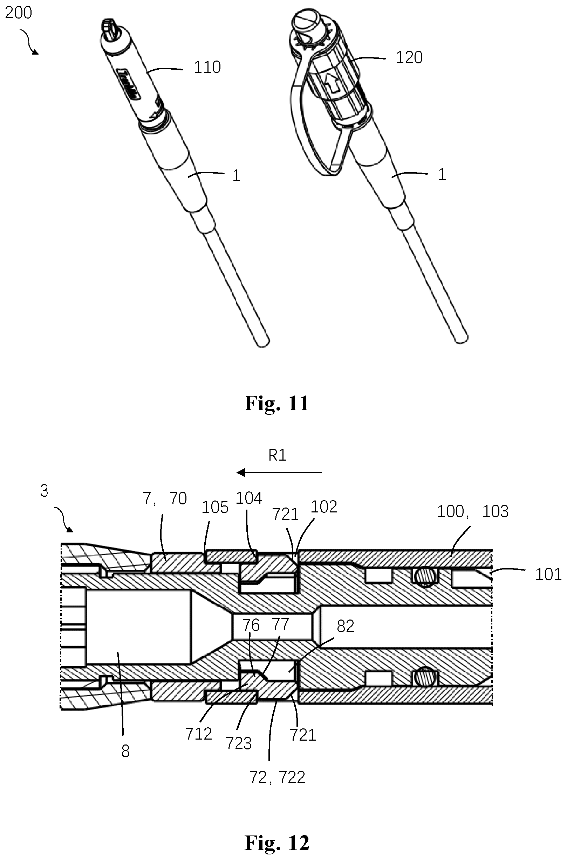

In order to particularly realize the connection of the optical fiber connector 3 with counterpart, such as optical fiber connection port, optical fiber converter, dust cover, optical fiber adapter, etc., as shown in Figs. 5 to 7, the connector housing 5, particularly the retainer ring 7, may include an elastic snap-fit structure 71. Only one of the snap-fit structures 71 will be described in detail below, and the corresponding contents are readily applicable to the other of the snap-fit structures 71 and thus will not be repeated. The snap-fit structure 71 is movable from an initial state to a deformed state that is biased inward (i.e., the direction facing towards the internal passage of the optical fiber connector 3 or the central axis of the connector housing 5) with respect to the initial state, and is movable from the deformed state to the initial state under the action of a restoring elastic force. The snap-fit structure 71 may have a latching protrusion 72 projecting outward (i.e., facing away from the internal passage of the optical fiber connector 3 or the central axis of the connector housing 5). For example, when inserting the optical fiber connector 3 into the corresponding receiving portion of a counterpart for receiving the optical fiber connector 3, the latching protrusion 72 may engage into the corresponding cutout of the counterpart, so as to lock the counterpart and the optical fiber connector with each other. The specific structure of the counterpart will be described in more detail below in conjunction with Fig. 12.

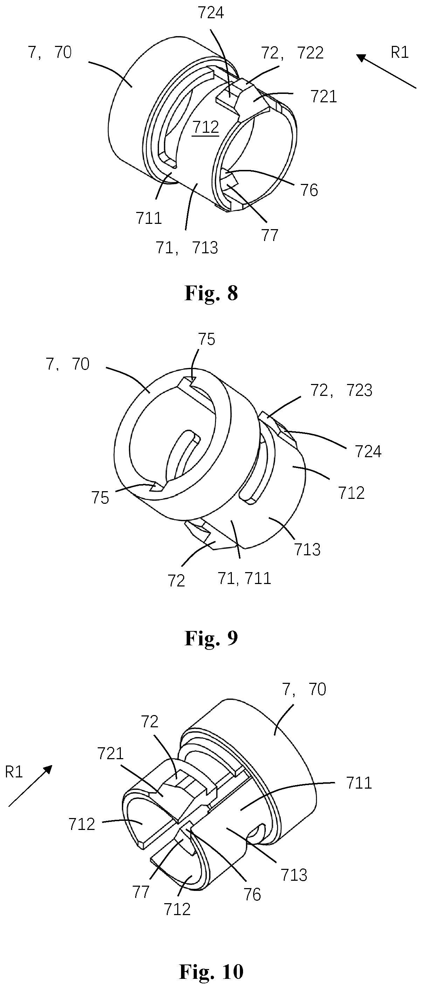

Specifically, as shown in Figs. 8 to 10, the retainer ring 7 may include an annular base 70, with the snap-fit structure 71 extending forward from the base 70. The snap-fit structure 71 may include a first section 711 elongately extending(substantially from the base 70) along the axial direction and a second section 712 elongately extending from the first section 711 along the circumferential direction. The latching protrusion 72 may be formed in an area of the second section 712 remote from the first section 711. Here, due to the elasticity of the material of the retainer ring 7 itself, the second section 712 may function as a sort of elastic arm. Specifically, in the case where, for example, an inward force is applied to the area of the second section 712 remote from the first section 711, particularly to the locking protrusion 72, the second section 712 may be biased and deformed inward under the action of the force, substantially with the first section 711 (particularly the transition area 713 between the second section 712 and the first section 711) as an axis, and in the case where the force is removed, the second section will move from the deformed state toward the initial state shown in the figures due to its own elasticity. Advantageously, the first section 711 and the second section 712 may be formed in a plate shape or, in other words, in a thin wall shape, which is beneficial for providing the snap-fit structure 71 with the resilience required. Here, the "thin wall shape" may be particularly understood that the thickness of the first section 711 and the second section 712 is significantly smaller than their planar extension dimension.

Referring to Figs. 6, 8 and 10, the latching protrusion 72 may include a first guide slope 721 that is raised along the first direction R1. Here, the first direction R1 points from the head of the optical fiber connector 3 to the tail of the optical fiber connector. It can be understood that, when connecting the optical fiber connector 3 with the counterpart, for such as optical fiber connection port, optical fiber converter, dust cover, optical fiber adapter, etc., the counterpart generally moves along the first direction R1 with respect to the optical fiber connector 3. As can be seen from Fig. 12, the counterpart 100 may comprise the above-mentioned receiving portion 101 for receiving the optical fiber connector 3. The optical fiber connector 3 may be at least partially received in the receiving portion 101. In addition, the counterpart 100 may include a cutout 102 communicating with the receiving portion 101, wherein the cutout 102 may be provided in the inner wall of the counterpart 100. The cutout 102 may be constructed as a through hole (penetrating through the side wall 103 of the counterpart 100) as shown in the figure. The cutout 102 may as well be constructed as a blind hole (not penetrating through the side wall 103 of the counterpart 100). When the optical fiber connector 3 is pushed into the receiving portion 101 of the counterpart 100, the first guide slope 721 may be first in contact with the counterpart 100, and with the movement of the counterpart 100 along the first direction R1, the force exerted by counterpart 100 onto the first guide slope 721 may cause the snap-fit structure 71, particularly the second section 712 as well as the latching protrusion 72, to be biased inward, so as to allow the snap-fit structure 71 to enter the receiving portion 101 of the counterpart 100. As the counterpart 100 continues to move along the first direction R1, the latching protrusion 72 may snap into the cutout 102 due to the outward resilience of the second section 712, so as to lock the optical fiber connector 3 and the counterpart 100 with each other.

As can be most clearly seen from Fig. 27, when viewed along the first direction R1, the latching protrusion 72 may include a top 722 that connects to the first guide slope 721. The top 722 here forms the uppermost portion of the latching projection 72, which has the farthest radial distance with respect to the longitudinal axis of the optical fiber connector 3. The latching protrusion 72 may further include a step portion 723 that connects to the top 722 along the first direction R1. The top 722 may descend along the first direction R1 via the step portion 723 and connect to the outer surface of the second section 712. The step portion 723 may form a latching action surface, in the case where the latching projection 72 is snapped in the cutout 102, the latching action surface or, in other words, the step portion 723 cooperates with the latching mating surface 104 of the cutout 102 of the counterpart 100, to prevent the optical fiber connector 3 from being pulled out from the counterpart 100 along the first direction R1.

As can be most clearly seen in Fig. 12, the outer diameter of the base 70 of the retainer ring 7 may advantageously be greater than the outer diameters of the first section 711 and the second section 712. In addition, the distance between the forward-facing annular surface 74 of the base 70 of the retainer ring 7 and the step portion 723 may be adapted to the distance between the rear end 105 and the latching mating surface 104 of the counterpart 100, such that after the latching protrusion 72 is snapped in the cutout 102, the further movement of the counterpart 100 relative to the optical fiber connector 3 along the first direction R1 is prevented by the annular surface 74 of the base 70.

In order to achieve unlocking of the optical fiber connector 3 from the counterpart 100, in some embodiments, as can be most clearly seen from Figs. 7 to 9, the latching protrusion 72 may include an unlocking slope 724 descending along a circumferential direction. The top 722 of the latching protrusion 72 may transition, in particular smoothly, to the outer surface of the second section 712 via the unlocking slope 724. In the illustrated embodiment, the unlocking slope 724 descends from the free end of the second section 712 toward the first section 711. Of course, an unlocking slope on the other side of the top 722 in the circumferential direction and therefore descending from the first section 711 toward the free end of the second section 712 is also feasible. By rotating the optical fiber connector 3 or the counterpart 100 in a corresponding direction, the latching protrusion 72 can be disengaged from the cutout 102, thereby realizing the unlocking of the optical fiber connector 3 from the counterpart 100. In some other embodiments, in the case where the cutout 102 is constructed as a through hole penetrating through the side wall 103 of the counterpart 100, it is also possible to apply an action to the latching protrusion 72 engaged in the cutout 102 from the outside of the counterpart 100 (e.g., with the aid of a tool or finger), such that the second section 712 elastically deforms inwardly, thereby disengaging the latching protrusion 72 from the cutout 102.

Advantageously, the connector housing 5, in particular the retainer ring 7, may comprise two snap-fit structures 71, the two snap-fit structures 71 may be rotationally symmetric about the central axis of the optical fiber connector 3. In other words, the whole retainer ring 7 may be rotationally symmetric about the central axis of the optical fiber connector 3.

In order to define the position of the retainer ring 7 and the connector body 8 with respect to each other, the connector body may include a positioning rib 85 extending along the axial direction on the outer wall (see Fig. 5), and the retainer ring 7 may include a positioning groove 75 corresponding to the positioning rib 85 on the inner wall, particularly on the inner wall of the base 70 (see Fig. 9). The positioning rib 85 and the positioning groove 75 may cooperate to define the position of the retainer ring 7 and the connector body 8 with respect to each other in the circumferential direction. The positioning rib 85 may have a rounded portion or a sharpened portion at the extremity facing towards the tail of the connector body 8, so as to facilitate inserting the positioning rib 85 into the positioning groove 75.

As shown in Figs. 5 and 6, the connector body 8 may include a recess 82 extending along the circumferential direction on the outer wall. In the case where the retainer ring 7 is sleeved on the connector body 8, the second section 712 of the snap-fit structure 71 may be located substantially in the area of the recess 82. Here, the recess 82 may form a free space for the second section 712 of the snap-fit structure 71 to allow the second section 712 to elastically bias inward. The extension dimension of the recess 82 along the circumferential direction may be adapted to the extension dimension of the second section 712 along the circumferential direction. In the embodiments shown in the figures, one recess 82 may extend along the circumferential direction by an angle of, for example, 120° to 150°.

As shown in Figs. 6, 10 and 12, the snap-fit structure 71 may include a retaining protrusion 76 located on the inner wall of the second section 712. The retaining protrusion 76 may transition to the inner wall of the second section along a second direction opposite to the first direction R1 via a second guide slope 77. The retainer ring 7 may be pushed onto the connector body 8 from the tail of the connector body 8. During this process, the force exerted by the connector body 8 on the second guide slope 77 may slightly stretch the second section 712 of the retainer ring 7. After the positioning rib 85 of the connector body 8 is inserted into the positioning groove 75 of the retainer ring 7, as the retainer ring 7 continues to be pushed forward, the second section 712 may spring back inward in the area of the recess 82 of the connector body 8. Here, the retaining protrusion 76 and the recess 82 may cooperate to define the position of the retainer ring 7 and the connector body 8 with respect to each other along an axial direction, particularly to prevent the retainer ring 7 from moving in the first direction R1 relative to the connector body 8. Further, the front end of the retainer ring 7 may abut against the flange of the connector body 8, so as to prevent the retainer ring 7 from being further pushed forward. In the embodiments shown in the figures, the retaining protrusion 76 may be located at a position corresponding to the latching protrusion 72 with respect to the second section 712. That is, the retaining protrusion 76 and the latching protrusion 72 may both be located in the free end area of the second section 712 remote from the first section 711.

It can be understood that, without limitation to the two-piece structure of the connector housing 5 described above, the connector body 8 and the retainer ring 7 may be integrally formed with each other, so as to constitute a one-piece connector housing 5. The details described above for the connector body 8 and the retainer ring 7 may be applied to the one-piece connector housing 5 accordingly.

Referring to Fig. 13, in some embodiments, in order to ensure that the optical fiber connector 3 is inserted into the counterpart 100 in the desired circumferential orientation, the ferrule housing 43 may comprise a chamfer 432 extending from its front end to back end. The ferrule housing 43 may at least in the front area thereof, preferably overall, comprise a substantially rectangular outer cross section. The chamfer 432 can be formed on at least one edge, for example on two or three edges of the ferrule housing 43. Here, the chamfer 432 may extend over a portion of the length of the ferrule housing 43. It is also feasible that the chamfer 432 extends over the entire axial length of the ferrule housing 43. Correspondingly, as shown in Fig. 14, the shape of the receiving portion 101 of the counterpart 100 may correspond to the shape of the ferrule housing 43. Specifically, the receiving portion 101 of the counterpart 100 may have a segment 106 matching the chamfer 432, the relative orientation of the optical fiber connector 3 relative to the counterpart 100 in the circumferential direction can be uniquely defined by the segment 106 and the chamfer 432.

As shown in Fig. 3, the optical fiber connector 3, particularly the connector body 8, may further include at least one annular groove 83 located between the snap-fit structure 71 and the head of the optical fiber connector 3, particularly the ferrule assembly 4, a sealing ring 84 may be provided in the annular groove 83 (see Fig. 2). The sealing ring 84 may be used to seal between the optical fiber connector 3 and the optical fiber connection port assembly 300.

Fig. 11 exemplarily shows an optical fiber connection system 200 according to the present application. The optical fiber connection system 200 herein may include an optical fiber cable assembly 1 having the optical fiber connector 3 and at least one counterpart 100. Here, the counterparts 100 may be a dust cover 110 for the optical fiber cable assembly 1 and an optical fiber converter 120 for Huawei connector, etc. The optical fiber converter 120 for Huawei connector may be used to convert the optical fiber connector 3 into a Huawei connector. Not limited thereto, it is also conceivable as the optical fiber adapter 120, for example, optical fiber converters for various different connectors such as SC connector, OptiTAP connector or DLX connector, etc. In addition, the counterpart 100 may also be an optical fiber adapter or an optical fiber connection port of any equipment, etc.

Although the exemplary embodiments of the present application have been described, those skilled in the art should understand that, multiple changes and modifications may be made to the exemplary embodiments of the present application without substantively departing from the spirit and scope of the present application. Accordingly, all the changes and modifications are encompassed within the protection scope of the present application.

## Claims

1. An optical fiber connector, wherein the optical fiber connector comprises a ferrule assembly and a connector housing, the ferrule assembly being arranged in a head area of the connector housing, wherein the optical fiber connector comprises an axially penetrating internal passage being constructed for allowing an optical fiber to extend through the optical fiber connector, wherein the connector housing comprises an elastic snap-fit structure movable from an initial state to a deformed state which is biased inward with respect to the initial state, and movable from the deformed state to the initial state under the action of the restoring elastic force, wherein the snap-fit structure comprises an latching protrusion projecting outward.

2. The optical fiber connector according to claim 1, wherein the snap-fit structure includes a first section extending along an axial direction and a second section extending from the first section along a circumferential direction, wherein the latching protrusion is formed in an area of the second section remote from the first section.

3. The optical fiber connector according to claim 2, wherein the first section and the second section are configured to be plate-shaped.

4. The optical fiber connector according to any one of claims 1 to 3, wherein the latching protrusion includes a first guide slope raised in a first direction, wherein the first direction is directed from the head of the optical fiber connector to the tail of the optical fiber connector.

5. The optical fiber connector according to claim 4, wherein viewed along the first direction, the latching protrusion sequentially includes a top connecting to the first guide slope and a step portion forming a latching action surface.

6. The optical fiber connector according to any one of claims 1 to 3, wherein the latching protrusion includes an unlocking slope descending along a circumferential direction.

7. The optical fiber connector according to any one of claims 1 to 3, wherein the connector housing comprises two snap-fit structures, the two snap-fit structures being rotationally symmetrical about a central axis of the optical fiber connector.

8. The optical fiber connector according to claim 2 or 3, wherein the connector housing includes a connector body with the internal passage and a retainer ring with the snap-fit structure, wherein the retainer ring is sleeved on the connector body.

9. The optical fiber connector according to claim 8, wherein the retainer ring includes an annular base, wherein the snap-fit structure connects to the base.

10. The optical fiber connector according to claim 8, wherein the connector body includes a positioning rib extending along the axial direction on the outer wall, and the retainer ring includes a positioning groove corresponding to the positioning rib on the inner wall, wherein the positioning rib and the positioning groove cooperate to define the relative position of the retainer ring with respect to the connector body along the circumferential direction.

11. The optical fiber connector according to claim 8, wherein the connector body includes a recess extending along the circumferential direction on the outer wall, wherein in the case where the retainer ring is sleeved on the connector body, the second section of the snap-fit structure is located in the area of the recess, wherein the recess forms a free space for the second section of the snap-fit structure.

12. The optical fiber connector according to claim 11, wherein the snap-fit structure includes a retaining protrusion located on the inner wall of the second section, wherein in the case where the retainer ring is sleeved on the connector body, the retaining protrusion and the recess cooperate to define the relative position of the retainer ring with respect to the connector body along the axial direction.

13. The optical fiber connector according to claim 12, wherein the retaining protrusion transitions, along a second direction, to the inner wall of the second section by way of a second guide slope, wherein the second direction is directed from the tail of the optical fiber connector to the head of the optical fiber connector.

14. The optical fiber connector according to claim 12 or 13, wherein the retaining protrusion is located at a position corresponding to the latching protrusion.

15. The optical fiber connector according to any one of claims 1 to 3, wherein the optical fiber connector includes at least one annular groove located between the snap-fit structure and the head of the optical fiber connector, wherein sealing ring is provided in the annular groove.

16. The optical fiber connector according to any one of claims 1 to 3, wherein the ferrule assembly comprises ferrule, spring and ferrule housing, wherein the ferrule abuts against the ferrule housing via the spring and protrudes from the front end of the ferrule housing.

17. The optical fiber connector according to claim 16, wherein the ferrule housing includes connection slot formed in the tail area thereof, and wherein the connector housing includes connection key formed in the head area thereof, wherein the ferrule housing is mounted on the connector housing in such a manner that the connection key is engaged in the connection slot.

18. The optical fiber connector according to claim 17, wherein the connection key and the connection slot extend along the axial direction.

19. The optical fiber connector according to claim 16, wherein the ferrule housing comprises chamfer extending from its front end to back end.

20. The optical fiber connector according to claim 19, wherein the ferrule housing, at least in the front area thereof, comprises a rectangular outer cross section, wherein the chamfer is formed on at least one edge of the ferrule housing.

21. The optical fiber connector according to claim 19 or 20, wherein the chamfer extends over a portion of the length of the ferrule housing.

22. The optical fiber connector according to claim 17 or 18, wherein in the case where the ferrule housing is mounted on the connector housing, the outer surface of the ferrule housing and the outer surface of the connector housing smoothly align with each other at least in some areas.

23. The optical fiber connector according to claim 22, wherein in the case where the ferrule housing is mounted on the connector housing, the outer surface of the ferrule housing and the outer surface of the connector housing smoothly align with each other, except for the area of the connection key and the connection slot.

24. The optical fiber connector according to any one of claims 1 to 3, wherein the optical fiber connector includes an optical cable fastener.

25. An optical fiber cable assembly, wherein the optical fiber cable assembly includes an optical fiber cable and the optical fiber connector according to any one of claims 1 to 24.

26. The optical fiber cable assembly according to claim 25, wherein the optical fiber cable assembly includes a tail sleeve.

27. An optical fiber connection system, wherein the optical fiber connection system includes the optical fiber connector according to any one of claims 1 to 24 or the optical fiber cable assembly according to claim 25 or 26 and includes a counterpart comprising an receiving portion configured to releasably receive the optical fiber connector, wherein the counterpart comprises at least one of an optical fiber converter, a dust cover, and an optical fiber adapter.

28. The optical fiber connection system according to claim 27, wherein the optical fiber converter is an optical fiber converter for SC connector, Huawei connector, OptiTAP connector, or DLX connector.

29. The optical fiber connection system according to claim 27 or 28,wherein the counterpart includes a cutout communicating with the receiving portion, wherein the latching protrusion of the optical fiber connector can be engaged into the cutout, thereby locking the counterpart and the optical fiber connector with each other.

30. The optical fiber connection system according to claim 29, wherein the cutout is a blind hole constructed on the counterpart.

31. The optical fiber connection system according to claim 29, wherein the cutout is a through hole constructed on the counterpart, an action can be exerted on the latching protrusion engaged in the cutout from the outside of counterpart via the through hole.

32. The optical fiber connection system according to claim 27 or 28, wherein the receiving portion includes a section for defining the circumferential relative orientation of the optical fiber connector with respect to the counterpart, wherein the shape of the section is matched with the shape of a corresponding section of the optical fiber connector.
